# EUROPEAN PATENT SPECIFICATION

(11) **EP 2 967 044 B1**
(45) Date of publication and mention of the grant of the patent: **03.01.2018**
(21) Application number: 14708542.7
(22) Date of filing: 07.03.2014
(51) Int. Cl.: A01N 37/06, A01N 37/18, A01N 43/06, A01N 43/36, C07C 69/52, C07C 233/02, A01P 13/00, A61K 36/899

(54) **HERBICIDAL COMPOSITION AND METHOD OF USE THEREOF**
HERBIZIDZUSAMMENSETZUNG UND VERFAHREN ZUR VERWENDUNG DAVON
COMPOSITION HERBICIDE ET SON PROCÉDÉ D'UTILISATION

(30) Priority: 15.03.2013 US 201361790430 P
(43) Date of publication of application: 20.01.2016
(73) Proprietor: Syngenta Participations AG, 4058 Basel (CH)
(72) Inventor: YOUNG, Neil, CH-4058 Basel (CH)
(74) Representative: Syngenta International AG
(86) International application number: PCT/EP2014/054419
(87) International publication number: WO 2014/139870

(56) References cited:
- US-A1- 2010 167 930
- US-A1- 2011 021 358
- HUAZHANG HUANG ET AL: "Phytotoxicity of Sarmentine Isolated from Long Pepper ( Piper longum ) Fruit", JOURNAL OF AGRICULTURAL AND FOOD CHEMISTRY, vol. 58, no. 18, 22 September 2010 (2010-09-22), pages 9994-10000, XP055045182, ISSN: 0021-8561, DOI: 10.1021/jf102087c

## Description

The present invention relates to a method of controlling the growth of weeds turfgrass using a herbicidal composition comprising sarmentine. More particularly, the invention is concerned with the selective control, reduction, or elimination of undesirable vegetation components of turf, especially of high quality sport or amenity turf containing cool season turf grasses. The application relates to a method for selectively controlling or modifying the growth of Poa annua in cool-season turf grass without causing more than 50% phytotoxicity to the cool-season turf grass, comprising applying to the turf grass or to the locus of the Poa annua in such turf grass, a herbicidally effective amount of a composition comprising sarmentine, wherein the amount of sarmentine applied to the turf grass or to the locus of the Poa annua in such turf grass is between 3.0 kilograms/hectare (kg/ha) and 6.0 kg/ha.

The protection of crops from weeds and other vegetation that inhibit crop growth is a constantly recurring problem in agriculture. In addition, aesthetically, it may be of interest to remove such unwanted weeds and vegetation, for example, when growing turf in areas such as golf courses and public parks. Weed control is one of the most challenging problems that turfgrass managers face in maintaining turfgrass at a standard of quality expected by users; it is sometimes difficult to selectively control the weeds without causing unacceptable injury to the turfgrasses.

One specific example of a common weed problem for golf course managers is Poa annua (also called Annual Bluegrass). P. annua can be particularly troublesome in bent grass putting greens as it is susceptible to abiotic stress, particularly water availability, as well as succumbing to a number of fungal diseases. In addition, if a green is composed of patches of P. annua and bent grass, the surface is not as uniform and reduces playability. Phytotoxic damage from removal efforts can create additional playability and aesthetic value losses

To help combat these problems, researchers in the field of synthetic chemistry have produced an extensive variety of chemicals and chemical formulations effective in the control of such unwanted growth. Chemical herbicides of many types have been disclosed in the literature and a large number are in commercial use. Some synthetic herbicides are analogs of natural products. Other herbicides and control techniques based on natural products are also known. However, many of the herbicides are for broad-leaf weeds but not grassy weeds.

In addition, an important factor in influencing the usefulness of a given herbicide is its selectivity towards the non-target turfgrasses. In some cases, a beneficial turfgrass is susceptible to the effects of the herbicide. Suitable herbicides must cause only commercially acceptable damage (suitably minimal or no damage) to the beneficial turfgrass while maximizing damage to the target weed (Poa annua) which infest the locus of the high quality sport or amenity turfgrass.

While there are numerous herbicides and control techniques currently available that have been tested against grassy weeds such as P. annua with varying levels of success, few agents are currently available for selective control of P. annua in turfgrass without causing unacceptable injury to the non-target turfgrasses. Suitable herbicide applications are controlled by course budget, availability of appropriate equipment, availability of qualified personnel. In addition, certain herbicides are subject to regulatory and product label use restrictions and/or may only be selectively used for resistance management reasons.

The compound sarmentine (N-(2E,4E-Decadienoyl)pyrrolidine) (CAS RN: 78910-33-5) is a plant extract of Piper sarmentosum having known herbicidal activity. Huang et al., Journal of Agricultural and Food Chemistry 58:18, pp9994-10000 (2010).

US patent publication 20110021358 discloses compositions comprising sarmentine and/or its analogs for use against plant pests, particularly plant phytopathogens such as plant pathogenic bacteria, fungi, insects, nematodes and/or as a pre- and post-emergence herbicide against weeds. In this publication, it is disclosed that sarmentine and/or its analogs can be applied to a substrate to control broadleaved and/or grass weeds prior to emergence of the weeds and/or after emergence of said weed(s). In a particular embodiment, the weeds are in a rice growing system and the weed is a rice weed(s). *Poa annua* is one of the grassy weeds that are mentioned in the patent disclosure.

However, nowhere in the US patent publication 20110021358 is there any disclosure or teaching which could give rise to the expectation that sarmentine and/or its analogs might be suitable for the selective control of *Poa annua* in turfgrass without causing unacceptable injury to the US2010/167930 discloses a method for modulating germination and growth of monocotyledonous, dicotyledonous and sedge weeds in a a turf grass growth system, comprising applying to said weeds or soil in said growth system at least one herbicidal agent, wherein said herbicidal agent is thaxtomin and possibly adding a second herbicide such as sarmentine, in an amount effective to modulate growth of said weeds but not modulate growth of the turf grass, wherein the weed/ plant which wants to be modulated is Poa annua inter alia.

High quality, healthy turf is essential, for example, to the golfing industry and weed control is an essential component of managing such turf health and quality. *Poa annua* is considered a weed in most instances due to the current lack of commercially available herbicides to safely control this grass within cool-season turf plantings. Accordingly, there is a continued need for alternative methods to control P. annua in such turfgrass without undue phytotoxic effects.

Accordingly, the present invention provides a method for selectively controlling or modifying the growth of Poa annua in cool-season turf grass without causing more than 50% phytotoxicity to the cool-season turf grass, comprising applying to the turf grass or to the locus of the Poa annua in such turf grass, a herbicidally effective amount of a composition comprising sarmentine, wherein the amount of sarmentine applied to the turf grass or to the locus of the Poa annua in such turf grass is between 3.0 kilograms/hectare (kg/ha) and 6.0 kg/ha.

The term 'herbicide' as used herein denotes a compound which controls or modifies the growth of undesired plants, in particular Poa annua. In the context of the present invention, the term 'herbicidally effective amount' indicates the quantity of sarmentine which is capable of producing a controlling or modifying effect on the growth of Poa annua. Controlling or modifying effects include all deviation from natural development, for example: killing, retardation, leaf burn, albinism or dwarfing. For example, Poa annua plants that are not killed are often stunted and non-competitive with flowering disrupted. The term 'plants' refers to all physical parts of a plant, including seeds, seedlings, saplings, roots, tubers, stems, stalks, foliage and fruits.

Sarmentine is applied at an application rate of between 3.0 kilograms/hectare (kg/ha) and 6.0 kg/ha, based on the total amount of active ingredient sarmentine in the composition used for carrying out the method of suppressing or controlling *Poa annua.* An application rate of between 3 kg/ha and 4.5 kg/ha being especially suitable.

In another embodiment, sarmentine can be applied or re-applied to the turfgrass or to the locus thereof for carrying out the method of suppressing or controlling *Poa annua* at intervals of from 5 to 25 days, up to the cumulative rate per turf growing season of between 3.0 kilograms/hectare (kg/ha) and 6.0 kg/ha, based on the total amount of active ingredient sarmentine in the composition.

In a more specific embodiment, in the practice of the methods of the invention, a composition comprising sarmentine can be applied or re-applied to the turfgrass or to the locus thereof for carrying out the method of suppressing or controlling *Poa annua* at intervals of from 7 to 21 days; more specifically, from 7 to 14 days, up to the cumulative rate of the sarmentine a.i. for the turfgrass locus being treated. For example, in one embodiment, the control of *Poa annua* and safety to cool-season grasses is improved when sarmentine and/or its analogs are applied sequentially at 14 day intervals to deliver the total active ingredient quantity of between 3.0 kilograms/hectare (kg/ha) and 6.0 kg/ha over a 90 day period.

The weed species to be controlled by the inventive method is Poa annua or Annual bluegrass (also called annual meadow grass) is understood as including (*Poa annua* var. annua *L.)* or (*Poa annua* var. *Reptans).*

The 'locus' is intended to include an established growing beneficial turf grass which contains or may contain seeds, seedlings and/or established vegetation of Poa annua.

The sarmentine compositions useful in the practice of the invention have been found to be highly effective for use in controlling the growth of Poa annua in cool-season turf grasses without causing significant injury to the cool-season turf grass when applied in accordance with the inventive method. More specifically, the safety benefits of the present invention are observed when a sarmentine composition is applied or reapplied to control Poa annua in growing cool-season turfgrasses wherein the levels of phytotoxicity observed for Poa annua are significantly higher than the phytotoxicity for the cool-season turf grass in which the Poa annua is growing or present as seed, seedlings or established vegetation. This allows for a selective control of the Poa annua within an established growing beneficial cool-season turf grass.

The present application controls Poa annua without causing significant injury to the cool-season turf grass meaning the application of sarmentine causes less than 50% phytotoxicity to the desired cool-season turf grass relative to an untreated control, more particularly, less than 33% phytotoxicity to the desired cool-season turf grass relative to an untreated control, more particularly, less than 25% phytotoxicity to the desired cool-season turf grass relative to an untreated control, even more particularly, less than 10% phytotoxicity to the desired cool-season turf grass relative to an untreated control, and even more particularly, less than 5% phytotoxicity to the desired cool-season turf grass relative to an untreated control; in each case, wherein the levels of phytotoxicity observed for Poa annua are significantly higher than the phytotoxicity for the cool-season turf grass in which the Poa annua is growing or present as seed, seedlings or established vegetation.

Cool-season turf grass is understood to include various turf grasses including, but not limited to, Kentucky bluegrass (Poa pratensis), rough bluegrass (Poa trivialis), Canada bluegrass (Poa compressa), creeping bentgrass (Agrostis stolonifera), colonial bentgrass (Agrostis tenius), velvet bentgrass (Agrostis canina) and redtop (Agrostis alba), tall fescue (Festuca arundinacea), creeping red fescue (Festuca rubra), chewings fescue (Festuca rubra var. commutate), perennial ryegrass (Lolium perenne), Italian ryegrass (Lolium multiflorum), bermudagrass (Cynodon dactylon), Zoysiagrass (Zoysia japonica), Manillagrass (Zoysia matrella) St. Augustinegrass (Stenotaphrum secundatum), Seashore paspalum (Paspalum vaginatum) and centipedegrass (Eremochloa ophiuroides).

Among the suitable cool-season turf grasses useful in the practice of the invention, there may be particularly mentioned Kentucky bluegrass (Poa pratensis), creeping bentgrass (Agrostis stolonifera) and tall fescue (Festuca arundinacea).

In addition, the 'cool-season turf grass' within the context of the present invention is to be understood to include those turfgrasses that have been made tolerant to abiotic or biotic pests and pesticides, including herbicides or classes of herbicides (and, suitably, the herbicides of the present invention), as a result of conventional methods of breeding (native traits) or by genetic engineering. Tolerance to herbicides means a reduced susceptibility to damage caused by a particular herbicide compared to conventional turfgrass breeds. Turfgrass can be modified or bred so as to be tolerant, for example, to HPPD inhibitors such as mesotrione, EPSPS inhibitors such as glyphosate or to glufosinate. Tolerance to abiotic stress means, for example, drought tolerance or heat tolerance. Tolerance to biotic pests means, for example, insect, nematode, or disease resistance.

In accordance with the method of the present invention, the application of compositions which contain sarmentine, wherein the amount of sarmentine applied to the turf grass or to the locus of the Poa annua in such turf grass is between 3.0 kilograms/hectare (kg/ha) and 6.0 kg/ha, to a locus comprising an established stand of a beneficial cool-season turfgrass is suitable for pre-emergence control of Poa annua or post-emergence control of Poa annua in such locus and acceptable selectivity to the desired beneficial turfgrass. In one embodiment, therefore, the method of the invention is practiced as a pre-emergent Poa annua control application. In a further embodiment, the method of the invention is practiced as a post-emergent Poa annua control application.

In addition, further, other biocidally active ingredients or compositions may be combined with sarmentine in the practice of the method according to the invention. For example, the compositions useful in the method of the invention may contain, in addition to sarmentine, or sarmentine and/or its analogs, other herbicides, insecticides, fungicides, bactericides, acaracides, nematicides, wetting agents and/or plant growth regulators, in order to broaden the spectrum of activity as a turf management tool. For instance, it may be advantageous to use other active ingredients that are commonly used in standard turf management practices or to combine other bioactive components with sarmentine as follows:

Herbicides such as:
Methiozolin (oxazole herbicide chemistry);
Cinmethylin (unclassified herbicide chemistry)
Mesotrione, sulcotrione, benzobicyclon, tembotrione and topramezone (HPPD herbicide chemistry, Triketone). Others include isoxazoles herbicide chemistry - isoxaflutole and isoxachlortole, and pyrazole herbicide chemistry - benxofenap, pyrazolynate and pyrazoxyfen;
Prodiamine and pendimethalin (DNA herbicide chemistry);
Dithiopyr and thiazopyr (Pyridine herbicide herbicide);
Trifloxysulfuron, metsulfuron, chlorsulfuron, halosulfuron, foramsulfuron, rimsulfuron, sulfosulfuron, flazasulfuron, iodosulfuron, and orthosulfamuron (Sulfonylureas herbicide chemistries).
Examples of imidazolinone herbicide chemistry include imazapyr.imaziquin, imazapyr and imazapic;
Examples of triazolopyrimide herbicide chemistry include cloransulam-methyl, florasulam, flumetsulam, penoxsulam;
Eamples of pyrimidinyl benzoate herbicide chemistry include bispyribac-sodium and pyrithio bac-sodium;
Examples of sulfonylamino-carbonyl-triazolinone herbicide chemistry include flucarbazone-sodium, and theincarbazone-methyl;
Atrazine and Simazine (Triazine herbicide chemistry);
Amicarbazone (Triazinone herbicide chemistry);
Siduron (Urea herbicide chemistry);
Carfentrazone-ethyl and sulfentrazone (Triazolinone herbicide chemistry);
Butafenacil (Pyrimidindione herbicide chemistry);
Bentazon (Benzothiadiazinone herbicide chemistry);
Isoxaben (Benzamide herbicide chemistry);
Indaziflam (Alkylazine herbicide chemistry);
Ipfencarbazone (Tetrazolinones herbicide chemistry);
Quinclorac (Quinoline carboxylic acid herbicide chemistry);
Ethofumesate (Benzofuran herbicde chemistry);
2,4-D, 2,4-DB, MCPP (Phenoxy-carboxylic acid herbicide chemistry);
Dicamba (Benzoic Acid herbicide chemistry);
Clopyralid, fluroxpyr , halauxifen, triclopyr and (Pyridine carboxylic herbicide chemistry).
Oxadiazon (Oxadiazole herbicide chemistry);
Prodiamine, pendimethalin, trioryzaline and trifluralin (Dinitroaniline herbicide chemistry);
Fluazifop-p-butyl, clodinafop-propargyl, cyhalofop-butyl, diclofop-methyl, fenoxaprop-P-ethyl, haloxyfop-R-methyl, propaquizafop, metamifop and quizalofop-P-ethyl (Aryloxyphenoxy-propionate "FOPS" herbicide chemistry). Alloxydim, butroxydim, clethodim, cycloxydim, profoxydim, sethoxydim, tepraloxydin, tralkoxydim (Cyclohexanedione "DIMS" herbicide chemistry). Pinoxaden (Phenylpyrazoline "DEN" herbicide chemistry).
Glyphosate (Glycine herbicide chemistry) - Native and transgenic turf;
Glufosinate-ammonium (Phosphinic herbicide chemistry) - Native and transgenic turf;
S-metolachlor and dimethenamid-P (Chloroacetamide herbicide chemistry)

Fungicides such as:
Triazoles includings propiconazole, difenoconazole, cyproconazole, triticonazole, metconazole, triadimefon and tebuconazole;
Strobilurins - azoxystrobin, trifloxystrobin, fluoxastrobin, picoxystrobin and pyraclostrobin ;
Fludioxonil;
Thiabendazole;
SDHIs including - boscalid, fluopyram, fluxapyroxad, isopyrazam, penthiopyrad, Solatenol™;
Chloronitriles - chlorothalonil;
Fluazinam;
Phenylamide - metalaxyl and mefonoxam;
Phosphites;
Dicarboxamides; and
Benzimidazole.

Phytohormones and elicitors such as: abscisic acid, auxins, brassinolides, cytokinins, gibberillins, and strigilactones, acibenzolar-S-methyl, harpin, jasmonic acid, and salicylic acid

Insecticides and nematicides such as: thiamethoxam, imidacloprid, abamectin, milbamectin, permethrin, lambda cyhalothrin, cypermethrin, bifenthrin , fipronil, chlorotraniliprole, and cyantraniliprole.

Soil Wetting Agents such as: alkyl polyglycosides (APG) and ethylene oxide-propylene oxide (EO/PO) block copolymer surfactants

Plant Growth Regulators (PGRs): uniconazole and paclobutrazol (azole PGR Chemistry, trinexapac-ethyl, and prohexadione-calcium (cyclohexane carboxylates), flurprimidol, and ancymidol (pyrimidinyl carbinols), chlormequat-chloride and mepiquat-chloride (quarternary ammoniums), and mefluidide (sulphonyl-amino phenyl-acetamides), 1-methylcyclopropene (cycloalkenes), and aminoethoxyvinylglycine (hydrochloride salts).

In one embodiment, in the practice of the method of the invention, sarmentine may be applied to cool season turfgrasses to control and/or manage Poa annua either simultaneously or sequentially with one or more of the foregoing herbicides, insecticides, fungicides, bactericides, acaracides, nematicides, wetting agents and/or plant growth regulators. For example, if administered sequentially, the components may be administered in any order in a suitable timescale, for example, with no longer than 24 hours between the time of administering the first component and the time of administering the last component. Suitably, all the components are administered within a timescale of a few hours, such as one hour. In another embodiment, if the components are administered simultaneously, they may be administered separately or as a tank mix or as a pre-formulated mixture of all the components or as a pre-formulated mixture of some of the components tank mixed with the remaining components.

Herbicidal compositions used in the method of the invention can be prepared on site by the end-user shortly before application to the foliage of the vegetation of Poa annua to be killed or controlled by mixing in aqueous solution a composition containing sarmentine and, optionally, additional active ingredients, suitable surfactants or adjuvants. Such compositions are typically referred to as "tank-mix" compositions.

Alternatively, the compositions used in the method of the invention may be provided to the end-user already formulated, either at the desired dilution for application ("ready to use" compositions) or requiring dilution, dispersion, or dissolution in water by the end-user ("concentrate" compositions). Such preformulated concentrates can be liquids or particulate solids. The compositions useful in the practice of the inventive method may thus be formulated as granules, as wettable powders, as emulsifiable concentrates, as powders or dusts, as flowables, as solutions, as suspensions or emulsions, or as controlled release forms such as microcapsules. These formulations may contain as little as 0.5% to as much as 95% or more by weight of active ingredient. The optimum amount for any given sarmentine containing formulation will depend on the presence of other compounds, formulation type, application equipment and nature of the turf substrate in which the formulation is to be applied (and the P.annua is to be controlled). A non- limiting list of suitable formulation types for use in the inventive methods are described below, where "active ingredient" or "active compound" means sarmentine alone or in combination with another bioactive material.

Wettable powders are in the form of finely divided particles which disperse readily in water or other liquid carriers. The particles contain the active ingredient retained in a solid matrix. Typical solid matrices include fuller's earth, kaolin clays, silicas and other readily wet organic or inorganic solids. Wettable powders normally contain 5% to 95% of the active ingredient plus a small amount of wetting, dispersing or emulsifying agent.

Emulsifiable concentrates are homogeneous liquid compositions dispersible in water or other liquid and may consist entirely of the active compound with a liquid or solid emulsifying agent, or may also contain a liquid carrier, such as xylene, heavy aromatic naphthas, isophorone and other non-volatile organic solvents. In use, these concentrates are dispersed in water or other liquid and normally applied as a spray to the area to be treated. The amount of active ingredient may range from 0.5% to 95% of the concentrate.

Granular formulations include both extrudates and relatively coarse particles and are usually applied without dilution to the area in which suppression of vegetation is desired. Typical carriers for granular formulations include sand, fuller's earth, attapulgite clay, bentonite clays, montmorillonite clay, vermiculite, perlite, calcium carbonate, brick, pumice, pyrophyllite, kaolin, dolomite, plaster, wood flour, ground corn cobs, ground peanut hulls, sugars, sodium chloride, sodium sulphate, sodium silicate, sodium borate, magnesia, mica, iron oxide, zinc oxide, titanium oxide, antimony oxide, cryolite, gypsum, diatomaceous earth, calcium sulphate and other organic or inorganic materials which absorb or which can be coated with the active compound.

For example, in one embodiment, sarmentine, or sarmentine and/or its analogs, are impregnated on controlled release fertilizer granules: Impregnation on granules: polymer-coated (Polyon™, Duration™, ESN™), polymer-coated sulfur coated (poly-S™), sulfur-coated (SCU), resin-coated (Osmocote™) or are impregnated on other granules such as palletized limestone, corncobs, clay, paper, and peanut hulls.

Granular formulations normally contain 5% to 25% active ingredients which may include surface-active agents such as heavy aromatic naphthas, kerosene and other petroleum fractions, or vegetable oils; and/or stickers such as dextrins, glue or synthetic resins. The granular substrate material can be one of the typical carriers mentioned above and/or can be a fertiliser material e.g. urea/formaldehyde fertilisers, urea, potassium chloride, ammonium compounds, phosphorus compounds, sulphur, similar plant nutrients and micronutrients and mixtures or combinations thereof.

Dusts are free-flowing admixtures of the active ingredient with finely divided solids such as talc, clays, flours and other organic and inorganic solids which act as dispersants and carriers.

Microcapsules are typically droplets or granules of the active material enclosed in an inert porous shell which allows escape of the enclosed material to the surroundings at controlled rates. Encapsulated droplets are typically 1 to 50 microns in diameter. The enclosed liquid typically constitutes 50 to 95% of the weight of the capsule and may include solvent in addition to the active compound. Encapsulated granules are generally porous granules with porous membranes sealing the granule pore openings, retaining the active species in liquid form inside the granule pores. Granules typically range from 1 millimetre to 1 centimetre, preferably 1 to 2 millimetres in diameter. Granules are formed by extrusion, agglomeration or prilling, or are naturally occurring. Examples of such materials are vermiculite, sintered clay, kaolin, attapulgite clay, sawdust and granular carbon. Shell membrane materials include natural and synthetic rubbers, cellulosic materials, styrene-butadiene copolymers, polyacrylonitriles, polyacrylates, polyesters, polyamides, polyureas, polyurethanes and starch xanthates. Suitable granules also include controlled-release granules which, for example, enable the release of sarmentine and/or its analogs uniformly over a 90 day period with a single application while improving *Poa annua* control efficacy and cool-season turfgrass safety.

Other useful formulations for use in the inventive methods include simple solutions of the active ingredients in a solvent in which it is completely soluble at the desired concentration, such as acetone, alkylated naphthalenes, xylene and other organic solvents. Pressurised sprayers, wherein the active ingredient is dispersed in finely-divided form as a result of vaporisation of a low boiling dispersant solvent carrier, may also be used.

Many of these formulations described above include wetting, dispersing or emulsifying agents. Examples are alkyl and alkylaryl sulphonates and sulphates and their salts, polyhydric alcohols; polyethoxylated alcohols, esters and fatty amines. These agents, when used, normally comprise from 0.1% to 15% by weight of the formulation.

Suitable agricultural adjuvants and carriers that are useful in formulating the compositions suitable for use in methods of the invention in the formulation types described above are well known to those skilled in the art. Suitable examples of the different classes are found in the non-limiting list below.

Liquid carriers that can be employed include water, toluene, xylene, petroleum naphtha, crop oil, acetone, methyl ethyl ketone, cyclohexanone, acetic anhydride, acetonitrile, acetophenone, amyl acetate, 2-butanone, chlorobenzene, cyclohexane, cyclohexanol, alkyl acetates, diacetonalcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethyl formamide, dimethyl sulfoxide, 1,4-dioxane, dipropylene glycol, dipropylene glycol methyl ether, dipropylene glycol dibenzoate, diproxitol, alkyl pyrrolidinone, ethyl acetate, 2-ethyl hexanol, ethylene carbonate, 1,1,1-trichloroethane, 2-heptanone, alpha pinene, d-limonene, ethylene glycol, ethylene glycol butyl ether, ethylene glycol methyl ether, gamma-butyrolactone, glycerol, glycerol diacetate, glycerol monoacetate, glycerol triacetate, hexadecane, hexylene glycol, isoamyl acetate, isobornyl acetate, isooctane, isophorone, isopropyl benzene, isopropyl myristate, lactic acid, laurylamine, mesityl oxide, methoxy-propanol, methyl isoamyl ketone, methyl isobutyl ketone, methyl laurate, methyl octanoate, methyl oleate, methylene chloride, m-xylene, n-hexane, n-octylamine, octadecanoic acid, octyl amine acetate, oleic acid, oleylamine, o-xylene, phenol, polyethylene glycol (PEG400), propionic acid, propylene glycol, propylene glycol monomethyl ether, p-xylene, toluene, triethyl phosphate, triethylene glycol, xylene sulfonic acid, paraffin, mineral oil, trichloroethylene, perchloroethylene, ethyl acetate, amyl acetate, butyl acetate, methanol, ethanol, isopropanol, and higher molecular weight alcohols such as amyl alcohol, tetrahydrofurfuryl alcohol, hexanol or octanol; ethylene glycol, propylene glycol, glycerine, or N-methyl-2-pyrrolidinone. Water is generally the carrier of choice for the dilution of concentrates.

Suitable solid carriers include talc, titanium dioxide, pyrophyllite clay, silica, attapulgite clay, kieselguhr, chalk, diatomaxeous earth, lime, calcium carbonate, bentonite clay, fuller's earth, cotton seed hulls, wheat flour, soybean flour, pumice, wood flour, walnut shell flour, or lignin.

A broad range of surface-active agents are advantageously employed in both said liquid and solid compositions, especially those designed to be diluted with carrier before application. The surface-active agents can be anionic, cationic, non-ionic or polymeric in character and can be employed as emulsifying agents, wetting agents, suspending agents or for other purposes. Typical surface active agents include salts of alkyl sulfates, such as diethanolammonium lauryl sulphate; alkylarylsulfonate salts, such as calcium dodecylbenzenesulfonate; alkylphenol-alkylene oxide addition products, such as nonylphenol-C₁₈ ethoxylate; alcohol-alkylene oxide addition products, such as tridecyl alcohol-C₁₆ ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly utilized in agricultural compositions include crystallisation inhibitors, viscosity modifiers, suspending agents, spray droplet modifiers, synthetic pigments, biological pigments such as anthocyanin, antioxidants, foaming agents, light-blocking agents, compatibilizing agents, antifoam agents, sequestering agents, neutralising agents and buffers, corrosion inhibitors, dyes, odorants, spreading agents, penetration aids, micronutrients, emollients, lubricants, sticking agents. The compositions for use in the practice of the inventive methods can also be formulated with liquid fertilizers or solid, particulate fertiliser carriers such as ammonium nitrate, or urea.

To enhance the beneficial aspects of sarmentine use in the control of Poa annua and to further minimize cool season turfgrass damage, it is suitable to apply sarmentine in combination with an antidote or safener if necessary. As used here in 'antidote' or "safener" describes a compound which has the effect of establishing or enhancing herbicide selectivity, i.e. continued herbicidal phytotoxicity to weed species by the herbicide and reduced or non-phytotoxicity to the cultivated turf species. The term 'antidotally effective amount' describes an amount of an antidote compound which counteracts to some degree a phytotoxic response of a beneficial turf to an herbicide. If necessary or desired for a particular application or turf, the compositions containing sarmentine (or sarmentine and/or its analogs) useful in the practice of the methods of the present invention may contain an antidotally effective amount of an antidote for the herbicides of the invention. Those skilled in the art will be familiar with antidotes which are suitable for use with optional herbicides that are useful in combining with sarmentine in the practice of the invention and can readily determine an antidotally effective amount for a particular compound and application. Among the suitable safeners there may be mentioned: cloquintocet-mexyl, cyprosulfamide, isoxadifen-ethyl and N-(2-Methoxybenzoyl) -4- [(methylaminocarbonyl)amino] benzenesulfonamide. It may also be mentioned that such antidotes or safeners can be in combination with turfgrass seed that is treated with such safener.

Each of the above formulations can be prepared as a package containing sarmentine (or sarmentine and/or its analogs) together with other inert or active ingredients of the formulation (diluents, emulsifiers, surfactants, other a.i.s.). As noted above, the formulations can also be prepared by a tank mix method, in which the ingredients are obtained separately and combined at the turfgrass application site.

These formulations can be applied to the areas where control is desired by conventional methods. Dust and liquid compositions, for example, can be applied by the use of power-dusters, broom and hand sprayers and spray dusters. The formulations for use in the inventive methods can also be applied from airplanes as a dust or a spray or by rope wick applications. To modify or control growth of germinating seeds or emerging seedlings, dust and liquid formulations can be distributed in the soil to a depth of at least one-half inch below the soil surface or applied to the soil surface only, by spraying or sprinkling. The formulations can also be applied by addition to irrigation water. This permits penetration of the formulations into the soil together with the irrigation water. Dust compositions, granular compositions or liquid formulations applied to the surface of the soil can be distributed below the surface of the soil by conventional means such as discing, Dryject, Hydroject, dragging or mixing operations.

The following are not intended as necessarily representative of the overall testing performed. It is noted that the rates used in the examples below are glasshouse rates and may be lower than those normally applied in the field as herbicide effects tend to be magnified in such conditions

### EXAMPLES

### Materials and methods

Turf selectivity evaluations were performed on the most important cool-season turf varieties, across 4 application rates with two replications contained within a factorial design. Sarmentine was applied at 0, 1500, 3000, and 6000 g ai ha⁻¹ on 09.11.2010 using a spray volume of 800 L ha⁻¹ with 0.2 % V/V x-77 adjuvant. The solution was delivered with LU 90-02S Lechler nozzles at 2.58 bars with an application speed of 0.96 km hr⁻¹.

Plants were grown in 9 cm diameter pots using Les Barges soil, previously characterized as containing 25.4 % clay; 7.1 % loam, 67.5 % sand, 7 % CaCO3, 2.4 % organic matter, and pH 7.5. Pots were fertilized with Oscarna Rasaflor at 100 g m-2 at seeding. Plants were grown throughout the experiment with day/night temperatures of 23°C/15°C with relative humidity of between 50-60 %.

Turf species (Table 1) were visually evaluated for symptoms of phytotoxicity (%) using the untreated control as a bench-mark for comparison at 7, 14, 21, and 28 days after application (DAA). Turfgrass species were mown at 13 DAA.

**Table 1. Turf species and seeding dates**

| **Genus / Species** | **EPPO** | **Common Name** | **Cultivar** | **Seeding Date** |
|---|---|---|---|---|
| | | | | |
| *Agrostis stolonifera* | AGSST | Creeping Bentgrass | Pennlinks | 28.09.2010 |
| *Festuca arundinacea* | FESAR | Tall Fescue | Farandole | 28.09.2010 |
| *Lolium perenne* | LOLPE | Perennial Ryegrass | Citation Fore | 13.10.2010 |
| *Poa annua* var. *Reptans* | POAAN | Annual bluegrass | True Putt | 21.10.2010 |
| *Poa pratensis* | POAPR | Kentucky Bluegrass | Midnight star | 28.09.2010 |

**Table 2. Phyto-toxicity estimates for grass x rate interactions with single degree contrasts to separate interaction means**

| **Effect** | **Grass** | **Rate** | **Phyto-toxicity Estimate** |
|---|---|---|---|
| | | **(g ai ha⁻¹)** | **(% of Untreated)** |
| | | | |
| GRASS*RATE | AGSST | 1500 | 13.1 |
| GRASS*RATE | | 3000 | 19.4 |
| GRASS*RATE | | 6000 | 27.5 |
| GRASS*RATE | FESAR | 1500 | 14.1 |
| GRASS*RATE | | 3000 | 22.8 |
| GRASS*RATE | | 6000 | 31.3 |
| GRASS*RATE | LOLPE | 1500 | 15.3 |
| GRASS*RATE | | 3000 | 27.2 |
| GRASS*RATE | | 6000 | 46.3 |
| GRASS*RATE | POAAN | 1500 | 35.0 |
| GRASS*RATE | | 3000 | 53.8 |
| GRASS*RATE | | 6000 | 83.1 |
| GRASS*RATE | POAPR | 1500 | 6.3 |
| GRASS*RATE | | 3000 | 8.8 |
| GRASS*RATE | | 6000 | 21.3 |
| | | | |
| Contrasts | | F Value | Pr > F |
| | | | |
| POAAN vs. OTHERS AT 1500 g ai ha-1 | | 48.95 | <.0001 |
| POAAN vs. OTHERS AT 3000 g ai ha-1 | | 110.15 | <.0001 |
| POAAN vs. OTHERS AT 6000 g ai ha-1 | | 125.05 | <.0001 |
| POAPR vs. POAAN AT 1500 g ai ha-1 | | 48.6 | <.0001 |
| POAPR vs. POAAN AT 6000 g ai ha-1 | | 112.54 | <.0001 |
| LOLPE vs. POANN AT 6000 g ai ha-1 | | 39.97 | <.0001 |
| AGSST vs. FESAR, LOLPE, POAPR AT 6000 g ai ha-1 | | 1.29 | 0.2573 |
| LOLPE vs. AGSST, FESAR, POAPR AT 6000 g ai ha-1 | | 16.91 | <.0001 |

| | | | |
|---|---|---|---|
| • At all three rates tested, the levels of phyto-toxicity were significantly higher for POANN compared to AGSST, FESAR, LOLPE, and POAPR • Given the genetic similarity of POAPR and POAAN, the differences in phyto-toxicity across the rate range evaluated were very surprising • No phyto-toxicity differences were noted when AGSST was compared to FESAR, LOLPE, and POAPR • Despite lower levels of phyto-toxicity on LOLPE compared to POAAN, sarmentine was significantly more injurious to LOLPE relative to AGSST, FESAR, and POAPR | | | |

## Claims

1. A method for selectively controlling or modifying the growth of *Poa annua* in cool-season turf grass without causing more than 50% phytotoxicity to the cool-season turf grass, comprising applying to the turf grass or to the locus of the *Poa annua* in such turf grass, a herbicidally effective amount of a composition comprising sarmentine, wherein the amount of sarmentine applied to the turf grass or to the locus of the Poa annua in such turf grass is between 3.0 kilograms/hectare (kg/ha) and 6.0 kg/ha.

2. The method of claim 1, wherein the cool-season turf grass is selected from Kentucky bluegrass (Poa pratensis), rough bluegrass (Poa trivialis), Canada bluegrass (Poa compressa), creeping bentgrass (Agrostis stolonifera), colonial bentgrass (Agrostis tenius), velvet bentgrass (Agrostis canina) and redtop (Agrostis alba), tall fescue (Festuca arundinacea), creeping red fescue (Festuca rubra), chewings fescue (Festuca rubra var. commutate), perennial ryegrass (Lolium perenne), Italian ryegrass (Lolium multiflorum), bermudagrass (Cynodon dactylon), Zoysiagrass (Zoysia japonica), Manillagrass (Zoysia matrella), St. Augustinegrass (Stenotaphrum secundatum), Seashore paspalum (Paspalum vaginatum) and centipedegrass (Eremochloa ophiuroides).

3. The method of claim 2, wherein the cool-season turf grass is selected from Kentucky bluegrass (Poa pratensis), creeping bentgrass (Agrostis stolonifera) and tall fescue (Festuca arundinacea).

4. The method of any one of claims 1 to 3, wherein the sarmentine is applied (i) pre-emergence or (ii) post-emergence, each with respect to the Poa annua.

5. The method of any one of claims 1 to 4, wherein the control of *Poa annua* and safety to cool-season grasses is improved when sarmentine is applied sequentially at 14 day intervals to deliver the total active ingredient quantity of between 3.0 kilograms/hectare (kg/ha) and 12.0 kg/ha over a 90 day period.

6. The method of any one of claims 1 to 4, wherein the composition comprising sarmentine is applied along with other herbicides, insecticides, fungicides, bactericides, acaracides, nematicides, wetting agents and/or plant growth regulators.

7. The method of any one of claims 1 to 6, wherein the composition comprising sarmentine is applied along with a herbicide safener.

8. The method of any one of claims 1 to 7, wherein the composition comprising sarmentine that is employed in the method is in a form selected from a granule, a wettable powder, an emulsifiable concentrate, a powders, a dust, a flowable, a solutions, a suspension, an emulsions, or a microcapsule.

9. The method of claim 6, wherein the composition comprising of sarmentine is applied within a controlled-release granule to enable the release of active ingredient uniformly over a 90 day period with a single application while improving *Poa annua* control efficacy and cool-season turf grass safety.

## Patentansprüche

1. Verfahren zum selektiven Bekämpfen oder Modifizieren des Wachstums von *Poa annua* in Kaltsaisonrasengras, ohne mehr als 50% Phytotoxizität bei dem Kaltsaisonrasengras zu bewirken, umfassend das Aufbringen auf das Rasengras oder auf den Standort von *Poa annua* in einem solchen Rasengras einer herbizid wirksamen Menge einer Zusammensetzung, die Sarmentin umfasst, wobei die Menge an Sarmentin, die auf das Rasengras oder auf den Standort von *Poa annua* in einem solchen Rasengras aufgebracht wird, zwischen 3,0 Kilogramm/Hektar (kg/ha) und 6,0 kg/ha beträgt.

2. Verfahren nach Anspruch 1, wobei das Kaltsaisonrasengras aus Wiesen-Rispengras (*Poa pratensis*), Gemeinem Rispengras (*Poa trivialis*), Zusammengedrücktem Rispengras (*Poa compressa*), Riesen-Straußgras (*Agrostis stolonifera*), Rotem Straußgras (*Agrostis tenius*), Hunds-Straußgras (*Agrostis canina*) und Weißem Straußgras (*Agrostis alba*), Rohr-Schwingel (*Festuca arundinacea*), Gewöhnlichem Rot-Schwingel (*Festuca rubra*), Horstrotschwingel (*Festuca rubra var. commutata*), Deutschem Weidelgras (*Lolium perenne*), Italienischem Raygras (*Lolium multiflorum*), Hundszahngras (*Cynodon dactylon*), Zoysia-Gras (*Zoysia japonica*), Manilagras (*Zoysia matrella*), St. Augustin-Gras (*Stenotaphrum secundatum*), Küsten-Paspalum (*Paspalum vaginatum*) und Hundertfüßergras (*Eremochloa ophiuroides*) ausgewählt wird.

3. Verfahren nach Anspruch 2, wobei das Kaltsaisonrasengras aus Wiesen-Rispengras (*Poa pratensis*), Riesen-Straußgras (*Agrostis stolonifera*) und Rohr-Schwingel (*Festuca arundinacea*) ausgewählt wird.

4. Verfahren nach einem der Ansprüche 1 bis 3, wobei das Sarmentin (i) vor dem Auflaufen oder (ii) nach dem Auflaufen, jeweils in Bezug auf *Poa annua,* aufgebracht wird.

5. Verfahren nach einem der Ansprüche 1 bis 4, wobei die Bekämpfung von *Poa annua* und die Sicherheit für Kaltsaisongräser verbessert wird, wenn Sarmentin sequenziell in 14-tägigen Intervallen so aufgebracht wird, dass die Gesamt-Wirkstoffmenge von zwischen 3,0 Kilogramm/Hektar (kg/ha) und 12,0 kg/ha über einen 90-tägigen Zeitraum zugeführt wird.

6. Verfahren nach einem der Ansprüche 1 bis 4, wobei die Sarmentin umfassende Zusammensetzung zusammen mit anderen Herbiziden, Insektiziden, Fungiziden, Bakteriziden, Akariziden, Nematiziden, Benetzungsmitteln und/oder Pflanzenwachstumsregulatoren aufgebracht wird.

7. Verfahren nach einem der Ansprüche 1 bis 6, wobei die Sarmentin umfassende Zusammensetzung zusammen mit einem Herbizid-Safener aufgebracht wird.

8. Verfahren nach einem der Ansprüche 1 bis 7, wobei die Sarmentin umfassende Zusammensetzung, die bei dem Verfahren verwendet wird, eine Form hat, die aus einem Granulat, einem benetzbaren Pulver, einem emulgierbaren Konzentrat, einem Pulver, einem Staub, einem fließfähigen Stoff, einer Lösung, einer Suspension, einer Emulsion oder einer Mikrokapsel ausgewählt wird.

9. Verfahren nach Anspruch 6, wobei die Sarmentin umfassende Zusammensetzung in einem kontrolliert freisetzenden Granulat aufgebracht wird, so dass die Freisetzung des Wirkstoffs gleichmäßig über einen 90-tägigen Zeitraum bei einer einzigen Aufbringung ermöglicht und gleichzeitig die Wirksamkeit der Poa annua-Bekämpfung und die Sicherheit des Kaltsaisonrasengrases verbessert wird.

## Revendications

1. Méthode de contrôle ou de modification de manière sélective de la croissance de *Poa annua* dans du gazon de saison fraîche sans provoquer plus de 50% de phytotoxicité au gazon de saison fraîche, comprenant l'application au gazon ou au lieu de développement de Poa *annua* dans un tel gazon, d'une quantité efficace sur le plan herbicide d'une composition comprenant de la sarmentine, où la quantité de sarmentine appliquée au gazon ou au lieu de développement de *Poa annua* dans un tel gazon se trouve entre 3,0 kilogrammes/hectare (kg/ha) et 6,0 kg/ha.

2. Méthode selon la revendication 1, dans laquelle le gazon de saison fraîche est choisi parmi le pâturin des prés (*Poa pratensis*), le pâturin commun (*Poa trivialis*)*,* le pâturin du Canada (*Poa compressa*), l'agrostide stolonifère (*Agrostis stolonifera*), l'agrostide colonial (*Agrostis tenius*), l'agrostide canine (*Agrostis canina*) et l'agrostide blanche (*Agrostis alba*)*,* la fétuque élevée (*Festuca arundinacea*), la fétuque rouge traçante (Festuca *rubra*), la fétuque de Chewings (*Festuca rubra* var. *commutata*), le ray-grass anglais (*Lolium perenne*), le ray-grass italien (*Lolium multiflorum*), le cynodon (*Cynodon dactylon*), les graminées de type Zoysia (*Zoysia japonica*), le gazon des Mascareignes (*Zoysia matrella*), l'herbe de St-Augustin (*Stenotaphrum secundatum*), le paspale à deux épis (*Paspalum vaginatum*) et l'herbe mille-pattes (*Eremochloa ophiuroides).*

3. Méthode selon la revendication 2, dans laquelle le gazon de saison fraîche est choisi parmi le pâturin des prés (*Poa pratensis*), l'agrostide stolonifère (*Agrostis stolonifera*), et la fétuque élevée (*Festuca arundinacea*).

4. Méthode selon l'une quelconque des revendications 1 à 3, dans laquelle la sarmentine est appliquée (i) en pré-levée ou (ii) en post-levée, dans chaque cas par rapport à *Poa annua.*

5. Méthode selon l'une quelconque des revendications 1 à 4, dans laquelle le contrôle de *Poa annua* et la sécurité vis-à-vis des gazons de saison fraîche est améliorée lorsque de la sarmentine est appliquée séquentiellement selon des intervalles de 14 jours afin d'administrer la quantité totale d'ingrédient actif comprise entre 3,0 kilogrammes/hectare (kg/ha) et 12,0 kg/ha sur une période de 90 jours.

6. Méthode selon l'une quelconque des revendications 1 à 4, dans laquelle la composition comprenant de la sarmentine est appliquée conjointement avec d'autres herbicides, insecticides, fongicides, bactéricides, acaricides, nématicides, agents mouillants et/ou substances de croissance.

7. Méthode selon l'une quelconque des revendications 1 à 6, dans laquelle la composition comprenant de la sarmentine est appliquée conjointement avec un phytoprotecteur.

8. Méthode selon l'une quelconque des revendications 1 à 7, dans laquelle la composition comprenant de la sarmentine qui est employée dans la méthode se trouve sous une forme choisie parmi des granulés, une poudre mouillable, un concentré émulsifiable, une poudre, des poussières, une pâte fluide, une solution, une suspension, une émulsion ou des microcapsules.

9. Méthode selon la revendication 6, dans laquelle la composition comprenant de la sarmentine est appliquée au sein de granulés à libération contrôlée qui permettent la libération d'ingrédient actif de manière uniforme sur une période de 90 jours avec une application unique, tout en améliorant l'efficacité de contrôle de *Poa annua* et la sécurité vis-à-vis des gazons de saison fraîche.
